Europäisches Patentamt

(19) European Patent Office                    (11) Publication number:  **0 053 445**
Office européen des brevets                                         **A1**

(12)                        **EUROPEAN PATENT APPLICATION**

(21) Application number: **81305341.0**        (51) Int. Cl.³: **H 02 G  15/18,** F 16 L  55/16,
(22) Date of filing: **11.11.81**                          B 29 C  27/22


(30) Priority: **24.11.80  US 210066**            (71) Applicant: **AMP INCORPORATED, Eisenhower
                                                  Boulevard, Harrisburg, Pennsylvania (US)**


(43) Date of publication of application: **09.06.82**
   **Bulletin 82/23**                           (72) Inventor: **Beinhaur, Ernest Lloyd, 5840 Mayfair Drive,
                                                  Harrisburg Pennsylvania 17112 (US)**


(84) Designated Contracting States: **AT BE CH DE FR GB IT    (74) Representative: Gray, Robin Oliver et ai, 20 Queensmere
   LI NL SE**                                     Slough, Berkshire, SL1 1YZ (GB)**

(54)  **Conformable sheathing means.**

(57)  A conformable sheathing means 20 and method are
provided for forming environmentally tight seals around
portions of elongated objects. The sheathing means 20
includes an inflatable body 22 having an elongated gener-
ally tubular shape with a central opening 24 in which
elongated objects are received. The body is formed of
resilient material and is a toroid, having a sealable en-
closure 26 extending around the central opening 24. Pres-
surized gas 35 is injected into the sealable enclosure 26
to inflate the body 22. The sheathing means 20 is in-
stalled by rolling and simultaneously everting the body
22, while inflated, over an elongated object having a
cross section larger than the central opening 24 of the
body 22. After properly positioning the body 22, it is
deflated, causing it to collapse around and conform to
the elongated object.

## CONFORMABLE SHEATHING MEANS

### INTRODUCTION

The present invention relates to a sheathing means and method for sealing around elongated objects such as cables, conduits, or the like.

When elongated objects such as cables or conduits are joined or repaired it is usually necessary to enclose the joined or repaired area with some type of protective covering. For example, splices in electrical and communication cables which are exposed to the environment must be protected against moisture penetration. Conduits carrying fluids must be similarly sealed at joints. Previous techniques available to form seals around elongated objects include multiple wrapping with adhesive strip material, use of thermoplastic covers made from heat shrinkable material, specially adapted joint casings, and various types of conformable sheathing means or sealing boots.

There is disclosed in US-A-3,897,088 a conformable sheathing means for an elongated object, of the type comprising a toroidal body of resilient material, the body having a sealable enclosure extending around a central opening, the central opening being smaller in cross-sectional area, when the body is deflated, than the cross-sectional area of the object to be received therein. The prior art device, referred to as a reinforced inflatable boot, has a toroidal body reinforced in a way which produces

9431-EPC

radial expansion of the central opening when inflated. The opening expands until it is larger in cross-sectional area than the elongated object to be received therein, and the reinforced inflatable boot is then slipped over the cable or conduit while inflated. While advantageous in numerous applications, the reinforced inflatable boot has certain limitations. It has been found, for example, to be relatively expensive to make in elongated form. Also, it has a limited range of radial expansion, which increases the difficulty of forming a tight seal when the object sealed has radial projections or unevenness which must be cleared during installation.

According to the present invention, a conformable sheathing means as defined above is characterized in that the central opening, when the body is inflated, is smaller in cross-sectional area than the elongated object to be received therein, whereby the body when inflated can be rolled and simultaneously everted over an elongated object having a cross section larger than the central opening and will strongly grip and conform to such objects when deflated.

The disadvantages of other prior art techniques for providing an environmentally tight seal around elongated objects are inconvenience of application. Wrapping with adhesive material requires a certain amount of skill and is relatively time consuming. Wrapping also presents a relatively high risk of leaks and results in a seal with low longitudinal strength and gripping force. Heat shrinkable covers are inconvenient to use in many field applications. Also, they cannot be used in environments where heat would be dangerous or destructive. Custom sealing sheaths made for a particular cable or conduit size or joint configuration are expensive and can be used only in places for which they were designed.

9431-EPC

An advantage of the present invention is that it provides a conformable sheathing means and method of installation which conveniently forms an environmentally tight seal of a generally elongated tubular form around portions of elongated objects.

Another advantage of the invention is that it provides a conformable sheathing means which can effectively seal around objects of varying diameters and shapes.

Another advantage of the invention is that it provides a method of forming an environmentally tight seal around portions of elongated objects which will facilitate joining elongated objects together.

According to another aspect of the invention, a method is provided for forming an environmentally tight seal around the portions of elongated objects using the conformable sheathing means described above. The steps in forming the seal include inflating the toroid shaped body, rolling and simultaneously everting the inflated body over one end of an elongated object having a cross section larger than the central opening of the body such that the elongated object becomes inserted within the central opening, positioning the body while inflated over selected portions of at least one elongated object to be sealed, and then deflating the body. After installation by the above method, the body is deflated and collapses around and conforms to the elongated object.

DESCRIPTION

An embodiment of the invention will now be described by way of example with reference to the accompanying drawings, in which:

FIGURE 1 is a perspective view of a conformable sheathing means in accordance with the present invention;

FIGURE 2 is a cross-sectional view of the sheathing means of Figure 1 taken along line 2-2 of Figure 1;

9431-EPC

FIGURE 3 is a partial cross-sectional view as in Figure 2 on an enlarged scale showing an illustrative method of filling the sheathing means of Figure 1;

FIGURE 4 is a partial cross-sectional view as in Figure 3 showing an illustrative method of deflating the sheathing means of Figure 1;

FIGURE 5 is a cross-sectional view as in Figure 2 showing an alternative embodiment of the sheathing means of Figure 1;

FIGURES 6 through 12 illustrate the method of the present invention for installing a conformable sheathing means over portions of elongated objects;

FIGURES 13 through 15 illustrate an alternative application of the sheathing means of Figure 1, namely to seal a joint in a conduit; and

FIGURES 16 and 17 illustrate another alternative application of the sheathing means of Figure 1, namely to effect a repair in a fluid conduit.

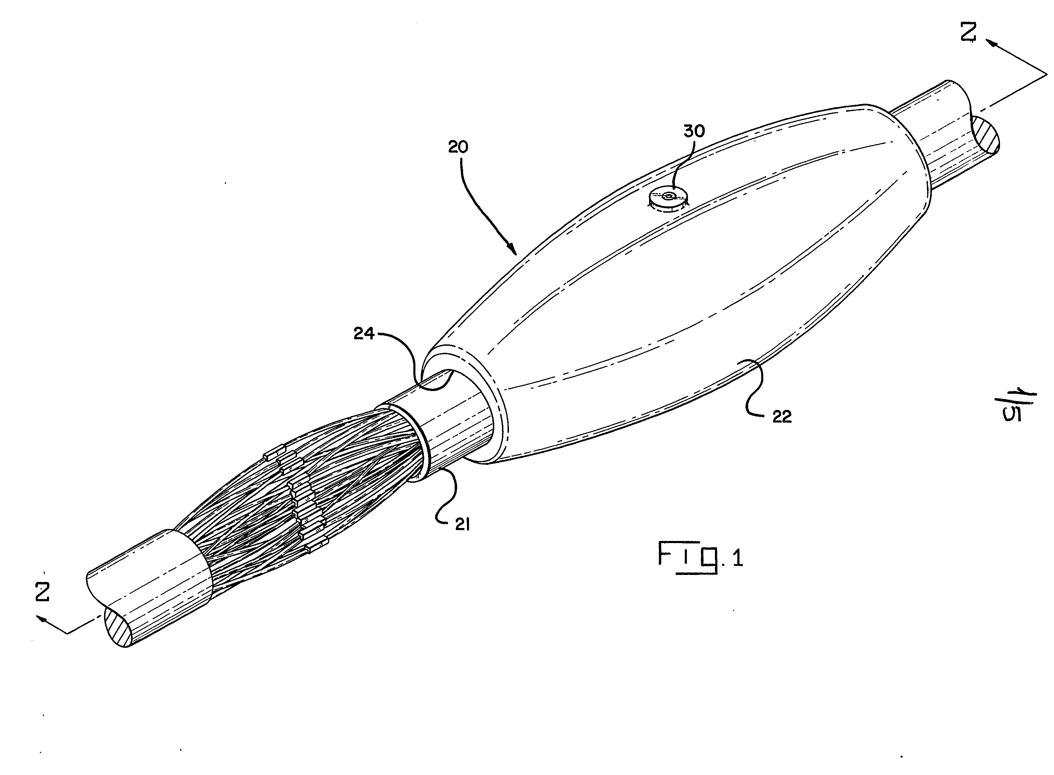

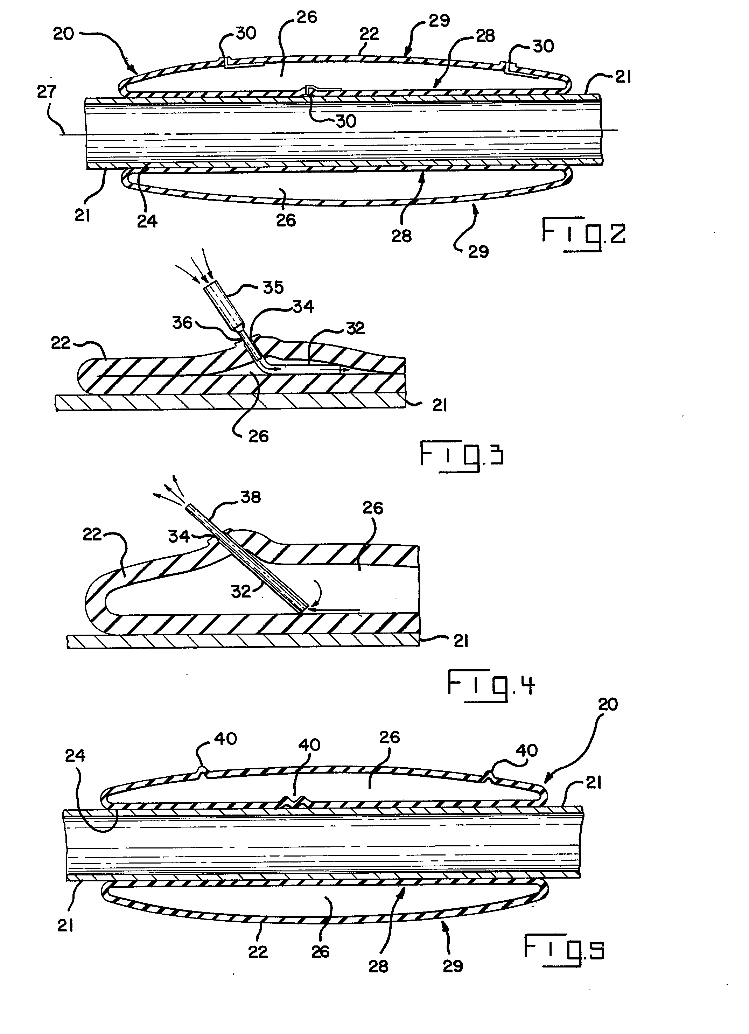

Referring to Figures 1 and 2, a first embodiment of a conformable sheathing means 20 according to the present invention is shown in an inflated state on a multistranded cable 21. Sheathing means 20, referred to hereafter as a sheath, has a body 22 which is in the form of a toroid (see Figure 2). Body 22 is a closed inflatable volume preferably formed of a suitable resilient sheet material such as rubber. The body has an elongated generally tubular shape which includes a central opening 24 through which cable 21 extends. The interior of the body is an annular sealable enclosure 26 which extends around central opening 24. Alternatively described, the body consists of two nested tubular members, one inside the other, formed of the aforementioned resilient sheet material, which are joined together as a toroid. The resultant body has two layers of sheet material 28 and 29 disposed radially outwardly from each point along the central axis 27 of the body, except at

9431-EPC

the ends where the sheets join. Pressurized gas for inflating the body is received in sealable enclosure 26 between the two layers.

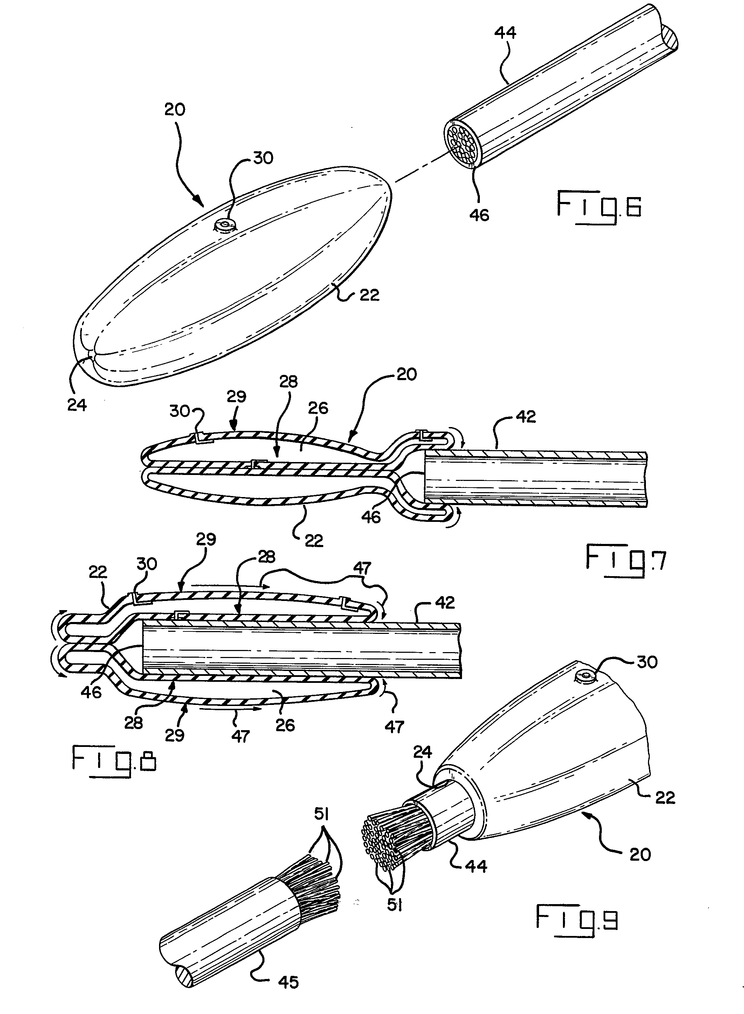

Sheath 20 is provided with a plurality of valves 30 for ingress and egress of pressurized gas to sealable enclosure 26. In the first embodiment, valves 30 are shown as reed-type valves (see Figures 3 and 4) which each include a long flexible tube 32 extending into the interior of sealable enclosure 26 from an opening 34 on the outside surface of the body. Tube 32 will be in a collapsed state when the body is inflated, as in Figure 1, due to the pressure exerted by the gas on the tube. A plurality of the valves are provided, spaced apart along a section of the body extending parallel with central opening 24 (for example, along section line 2-2 of Figure 1). Generally, three valves spaced equally along the aforementioned section will be sufficient to ensure that at least one of the valves will be on the outside of the body regardless of the state of eversion of the body.

Figures 3 and 4 illustrate the operation of valves 30. To inflate body 22, a supply of pressurized gas 35 is connected to a noncollapsable pipe or needle 36 with a diameter which allows it to be inserted into opening 34 of the valve. The gas is injected through the pipe into the interior of sealable enclosure 26, inflating the body. Once inflated, pipe 36 is withdrawn and the valve tube 32 will immediately collapse upon itself, preventing escape of the pressurized gas. To release the gas and deflate the body, a pipe 38, which can be the same as inflating pipe 36, is inserted far enough into valve tube 32 to open the entire length of the tube, allowing the gas to escape as shown in Figure 4.

It is not necessary that valves be used to inflate and deflate the sheath. Inflation can be accomplished by an injection needle designed to pierce one layer of the surface

9431-EPC

resilient material to inject gas into the interior. Assuming the resilient material is of a type which will reseal the opening upon withdrawal of the needle, the body will remain inflated when the needle is removed. Deflation can also be accomplished by a needle.

An alternative pressure release means is shown in Figure 5. A plurality of nipples 40 are formed on the body to facilitate the release of pressure. The release is accomplished by simply cutting off one of the nipples 40. As in the first embodiment, a plurality of nipples are preferably provided, spaced apart on the body along a section of the body extending parallel with central opening 24. This will ensure that at least one nipple will always be on the outside of the body. The embodiment of Figure 5 must be supplied pre-inflated or will have to be inflated by a piercing needle as described above. It has the advantage of convenient deflation in the field with a minimum of manipulation. Unlike the first embodiment equipped with valves, the embodiment of Figure 5 cannot be reinflated.

Figures 6 through 12 illustrate steps in the method of the present invention for forming an environmentally tight seal around portions of elongated objects, using the above described sheath. In the illustrated example, a splice between two multistranded communications cables 44 and 45 will be sealed and protected by the sheath.

Before installing a sheath 20, it is necessary to select one of the proper size for the particular application. Sheath size is not critical, but it is necessary to select a sheath small enough in diameter to strongly grip the elongated object over which it is installed. In other words, the cross section of the elongated object (cable, pipe, conduit or the like) should be larger than the diameter of the central opening 24 of the sheath when the sheath is deflated. The longitudinal dimension of the sheath -- its length through central

9431-EPC

opening 24 -- is only important insofar as it should cover the area to be protected and have sufficient gripping surface if longitudinal strength is required.

The first step in the method of sealing is to inflate body 22 in the manner shown in Figure 3. Inflation will separate the layers of sheet material forming the walls of body 22, expanding the outside diameter of the sheath and closing or greatly reducing the size of central opening 24. To accomplish the next step of installing body 22 over one of the cables 44, it is necessary to stretch body 22 over the free end 46 of the cable. This is accomplished by rolling and simultaneously everting the inflated body over the cable end such that the cable becomes inserted within central opening 24.

The installation process is illustrated in Figures 7 and 8. When the body is inflated, the two layers of resilient sheet material constituting the tubular walls of the body are maintained in spaced apart relation from one another by the pressurized gas within sealable enclosure 26. Thus, as the body is forced over the end of the cable, the two layers of sheet material are free to move past one another in opposite directions, as indicated by arrows 47 in Figure 8. The inside layer 28 adjacent cable 44 will in fact not move relative to the cable, but the outside layer 29 will roll past the ;inside layer. In this manner body 22 is "rolled" and simultaneously everted, i.e., turned inside out, as it is installed on the cable. Given the relative sizes of the cable the body, this operation would be impossible if the body were not inflated.

Once installed over the cable, sheath 20 is rolled back away from the location of the splice, as shown in Figure 9. The splice 50 is then formed by connecting together the various strands 51 of the cable in any conventional manner, as shown in Figure 10. Sheath 20 is then rolled back over the splice to the desired final position while still in its

9431-EPC

0053445

inflated state (see Figure 11). Finally, the body is deflated by any suitable method, such as using the tube 38 in the manner shown in Figure 4.

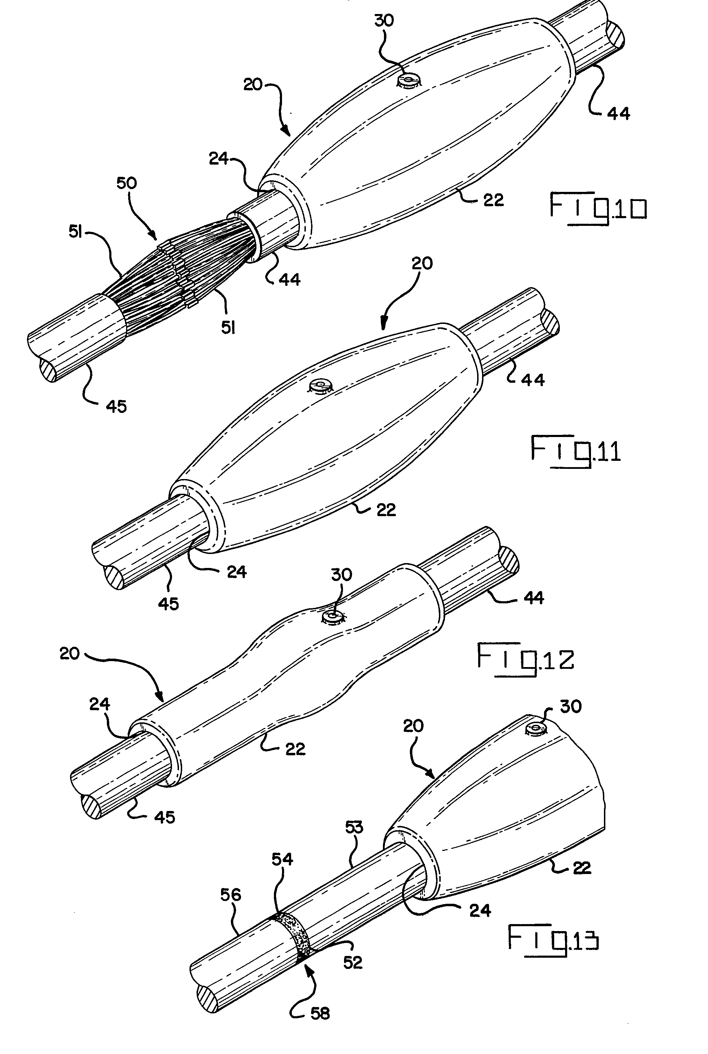

When deflated, sheath 20 collapses around the splice and adjacent portions of the cable, strongly gripping and conforming to the cable (see Figure 12). The result is an environmentally tight seal around the splice providing protection and also increasing the longitudinal strength of the splice.

The sheathing means and method of the present invention provides significant advantages over prior art techniques for sealing around cables or other elongated objects. For example, the sheath of the present invention can be installed and rolled over protrusions or regions of increased diameter in the elongated object to be sealed. Because it is rolled into place, the sheath does not slide with respect to the elongated object, which can be advantageous in certain applications where sliding or abrasion would be undesirable. The sheath can be installed without use of heat, thus permitting installation in environments where heat or other treatments would be prohibited. No special equipment is required other than a source of compressed air which can readily be provided by a simple pump or the like. If valves such as the one shown in Figures 1 through 4 are provided, the sheath can be reinflated at any time and moved aside or removed entirely. Thus, splices can be conveniently serviced. Furthermore, the invention is simple to use, requiring no special skill.

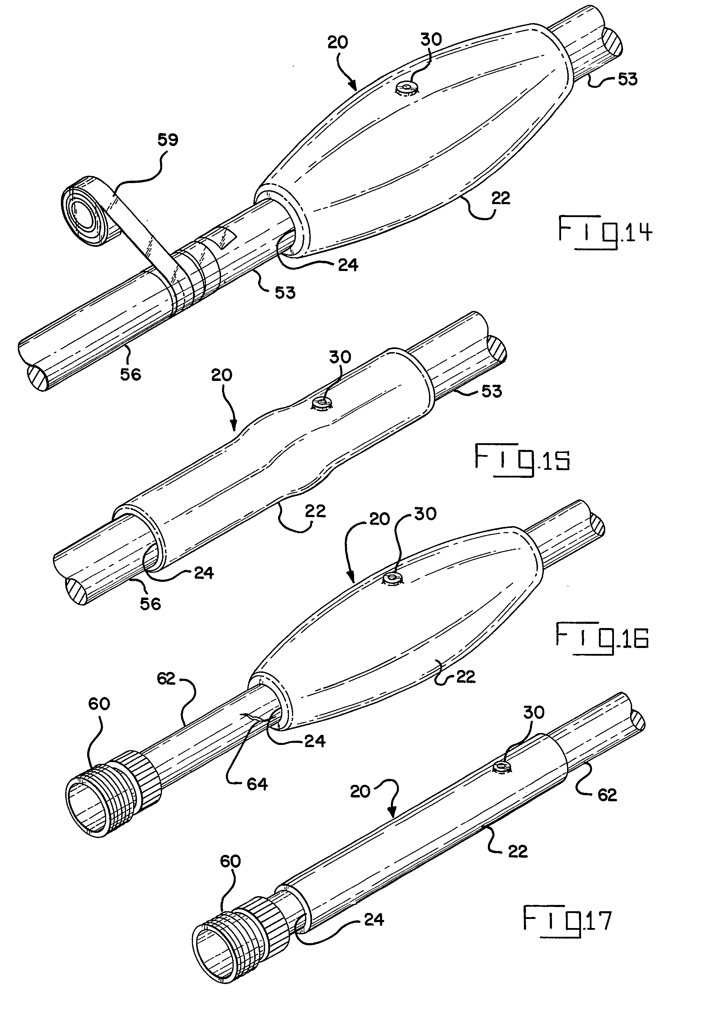

The method and means of the present invention are useful in numerous applications. Figures 13 through 15 illustrate use of the sheath to cover a pipe joint. Essentially, the method is the same as for the cable splice discussed above. After inflation, sheath 20 is installed over one end 52 of a first pipe 53. The end 54 of a second pipe 56 is then brought into juxtaposition with the first

9431-EPC

pipe end 52 and a joint is formed such as a weld 58. Mastic 59 or a similar protective coating can then be applied to the joint if desired (Figure 14). Finally, the sheath is rolled to its final position over the joint and deflated (Figure 15).

Joints between fluid or gas conduits, pipes, tubes or the like, can also be formed by the present invention without welding or other joining. For a conduit joint, for example, it is simply necessary to roll the sheath back far enough along one conduit to expose its free end, then bring the end of the other conduit into juxtaposition with the first end, and roll the sheath to a central position over the ends of both conduits. Even while inflated, the sheath will strongly grip both objects to be joined, allowing positioning without the need to support one or both of the objects. When deflated, the sheath will strongly grip and effectively join the objects together. A water-tight seal will generally result, eliminating the need for any additional joining steps.

Yet another use for the present invention is as a means for repairing cables, conduits, or the like by providing an environmentally tight seal around portions of a single elongated object. Figures 14 and 15 illustrate use of a sheath to repair a garden hose. Because the sheath can readily be rolled over areas of enlarged diameter, getting the sheath past the end 60 of hose 62 presents no problem. The sheath 20 is then positioned while inflated over a leak 64 or other damaged portion of the hose, and deflated. The result of this simple operation is a water-tight seal (Figure 17).

Similar repairs can be effected on other types of elongated objects. Damaged insulation on cables can be covered, for example. In place features such as valve caps or the like can be protected by sheaths.

Numerous other uses can be conceived for the present invention. If the surface of the sheath is coated with conductive material, a shielded cable can be readily repaired or spliced without installing additional shielding. Such a conductive sheath would preferably be formed by applying one or more conductive strips on the surface of the inflatable body along a section extending parallel with the central opening. Other uses of the sheath include joining together elongated objects of differing sizes and shapes, such as pipes, cables or conduits of different diameters.

Variations in the form of the sheathing means of the present invention are possible within the scope of the present invention. Other forms of valves could be used, for example. The invention will work using sheaths of any length. Relatively long sheaths will tend to provide a greater gripping surface, improving the longitudinal strength of the joint and discouraging penetration by moisture or the like. The sheath can be made of other suitable resilient materials. With a sheath made from food grade rubber, the invention could provide a joint for conduits carrying food products, for example. Other changes or modifications within the scope of the present invention will occur to those skilled in the art.

9431-EPC

CLAIMS:

1. A conformable sheathing means 20 for an elongated object, of the type comprising a toroidal body 22 of resilient material, said body 22 having a sealable enclosure 26 extending around a central opening 24, said central opening being smaller in cross-sectional area, when the body is deflated, than the cross-sectional area of the elongated object to be received therein, said body 22 being inflatable by injecting a pressurized gas into said sealable enclosure 26, said sheathing means being characterized in that said central opening 24 has a cross-sectional area which, when the body 22 is inflated, is smaller than the cross-sectional area of the elongated object to be received therein, whereby said body 22 when inflated can be rolled and simultaneously everted over elongated objects having a cross section larger than said central opening 24 and will strongly grip and conform to such objects when deflated.

2. A conformable sheathing means 20 as in claim 1, characterized in that said body 22 is an elongate body which is generally tubular in shape.

3. A conformable sheathing means 20 as in claim 1, characterized in that said body includes pressure release means on said body 22 for opening said sealable enclosure 26 to ambient pressure to deflate said body 22.

4. A conformable sheathing means 20 as in claim 3, characterized in that said pressure release means includes a nipple 40 formed on said body, wherein said nipple 40 can be severed to release pressure in said sealable enclosure 26.

5. A conformable sheathing means as in claim 3, characterized in that said body 22 has a plurality of said pressure release means spaced apart on said body 22 along a section of said body 22 extending parallel with said central opening 24 such that at least one of said pressure release

9431-EPC

means is on the outside of said body and accessible regardless of the state of eversion of said body 22.

6. A conformable sheathing means 20 as in claim 1, characterized in that said body 22 has valve means on said body 22 for inflating and deflating said body.

7. A conformable sheathing means 20 as in claim 6, characterized in that said body 22 includes a plurality of said valve means 30 spaced apart on said body extending parallel to the axis of said central opening such that at least one of said valve means is on the outside of said body and accessible regardless of the state of eversion of said body.

8. A conformable sheathing means 20 as in claim 1 including conductive material disposed on the exterior surface of said body 22 to facilitate electrical interconnection between conductive elongated objects by means of said conformable sheathing means.

9. A method of forming an environmentally tight seal around a joint between first and second elongated objects, said method being of the type utilizing an inflatable toroidal body having a central opening 24 therethrough which is smaller in cross-sectional area, when the body is deflated, than the cross sections of the elongated objects to be sealed, of resilient material which is inflated, fit over said joint, and deflated to seal said joint, characterized by the following steps:

providing a body having a central opening therethrough which is smaller in cross-sectional area, when the body is inflated, than the cross-sectional area of the elongated objects;

inflating said body;

rolling and simultaneously everting said body 22 over an end of said first elongated object until said end is exposed from central opening 24,

joining an end of said second elongated object to said end of said first elongated object to form said joint,

rolling said body 22 over said joint,

deflating said body.

1/5

Fig.1

0053445

2/5

Fig.2

Fig.3

Fig.4

Fig.5

**Fig.6**

**Fig.7**

**Fig.8**

**Fig.9**

0053445

Fig.10

Fig.11

Fig.12

Fig.13

FIg.14

FIg.15

FIg.16

FIg.17

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| A | GB - A - 2 032 042 (E.T. OAKES)<br><br>* the whole document * | 1-3,9 |
| A/D | US - A - 3 897 088 (AMP)<br><br>* column 1, line 5 - column 5, line 3; figures 1-12 * | 1-3,6,9 |

**CLASSIFICATION OF THE APPLICATION (Int. Cl. 3)**

H 02 G 15/18
F 16 L 55/16
B 29 C 27/22

**TECHNICAL FIELDS SEARCHED (Int.Cl. 3)**

H 02 G 15/18
        15/08
        15/24
        15/04
         1/14
         1/16
F 16 L 55/16
        37/04
        37/06
B 29 C 27/22
        27/24

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 26-02-1982 | LOMMEL |

EPO Form 1503.1 06.78